# EUROPEAN PATENT SPECIFICATION

(11) **EP 3 650 811 B1**
(45) Date of publication and mention of the grant of the patent: **20.05.2026**
(21) Application number: 19219437.1
(22) Date of filing: 15.03.2017
(51) Int. Cl.: G01C 21/16, G06F 3/01, G02B 27/00, G02B 27/01

(54) **METHOD AND SYSTEM FOR DETERMINING AN ENVIRONMENT MAP OF A WEARER OF AN ACTIVE HEAD MOUNTED DEVICE**
VERFAHREN UND SYSTEM ZUR BESTIMMUNG EINER UMGEBUNGSKARTE EINES TRÄGERS EINER AKTIVEN KOPFMONTIERTEN VORRICHTUNG
PROCÉDÉ ET SYSTÈME POUR DÉTERMINER UNE CARTE D'ENVIRONNEMENT D'UN UTILISATEUR D'UN VISIOCASQUE ACTIF

(43) Date of publication of application: 13.05.2020
(62) Divisional of application: 17305282.0
(73) Proprietor: ESSILOR INTERNATIONAL, 94220 Charenton-Le-Pont (FR); Centre National de la Recherche Scientifique, 75016 Paris (FR)
(72) Inventor: BOUCHIER, Aude, 94220 CHARENTON-LE-PONT (FR); CANO, Jean-Paul, 94220 CHARENTON-LE-PONT (FR); COMBIER, Jessica, 94220 CHARENTON-LE-PONT (FR); VANDEPORTAELE, Bertrand, 31330 TOULOUSE (FR)
(74) Representative: Cabinet Novitech

(56) References cited:
- US-A1- 2010 066 750
- US-A1- 2013 328 925
- US-A1- 2016 266 386
- US-A1- 2017 039 767

## Description

### FIELD OF THE INVENTION

The invention relates to a method and system for determining an environment map of at least one environment parameter relating to the environment of a wearer of an active head mounted device. The invention further relates to a method and system for controlling an active head mounted device worn by a wearer, and to an active head mounted device comprising such systems.

### BACKGROUND OF THE INVENTION

Head mounted devices, also called smartglasses, are more and more complex so as to provide more and more information and/or services to the wearer.

Head mounted devices are often equipped with a plurality of sensors adapted to measure parameters relating to the wearer or the environment of the wearer, like cameras, eyetracker...

Such measured parameters may be used to adapt the mounted device.

Increasing the accuracy of the measurements performed by such sensors is important to be able to use such measurements to generate accurate information concerning the wearer and/or the environment which can used to control the head mounted device.

Nevertheless, sensors with increased capacities both in their measurement precision and their field of view are very expensive, bulky and have high energy consumption.

Because the sensors are embedded in the head mounted devices, some constraints exist like volume and dimensions for integration, weight, energy, need of calculation capacities, and so on...

Therefore, there is a need for an improved head mounted device equipped with sensors having limited volume, dimensions, weight and needing low energy consumption, while assuring good performances of the head mounted device.

An aim of the present invention is to propose such solution. US 2013/328925 A1 discloses a head mounted display device including a display unit for displaying one or more virtual objects, i.e., virtual display slates to a wearer of the device.

### SUMMARY OF THE INVENTION

A method for determining an environment map of at least one environment parameter relating to the environment of a wearer of an active head mounted device according to a first aspect of invention is disclosed as set forth in independent claim 1.

An active head mounted device according to a second aspect of the invention is disclosed as set forth in independent claim 11.

To this end, a first aspect of the invention as set forth in independent claim 1 proposes a method for determining an environment map of at least one environment parameter relating to the environment of a wearer of an active head mounted device comprising an active filter and a filter controller, the active head mounted device comprising at least a head orientation sensor and an environment data sensor configured to measure environment data indicative to the at least one environment parameter in at least one direction, the controller being adapted and configured to control an optical function of the active head mounted device based on the determined environment map and the filter controller being adapted and configured to control the active filter based on the determined environment map, the method comprising at least:
- a head orientation measurement step, during which a natural orientation of the head of the wearer is measured by the head orientation sensor;
- an environment data measurement step, during which environment data are measured by the data environment sensor for the measured orientation of the head of the wearer, the environment parameter comprising a luminosity parameter related to light sources around the wearer, and/or a color parameter indicative of colors in the environment of the wearer, and/or a parameter indicative of temperature, sound, noise level, air quality, or gas analysis;
- repeating the head orientation measurement step and the environment data measurement step for a plurality of different natural orientations of the head of the wearer, and
- an environment map determining step, during which the environment map is determined based on the measured environment data and the measured orientation of the head of the wearer for each different natural orientation of the head of the wearer.

Advantageously, such method allows using a simple sensor, i.e. configured to measure data for only one direction and another sensor which gives regularly orientation of the head of the user in order to build an environmental map. Indeed, due to natural head movements from the user, the 1D sensor allows the mapping for different orientations. Afterwards the map can be used by the embedded system for some automatism or other process. This map can be a map of luminosity, distance to objects, images, and so on...

According to further embodiments which can be considered alone or in combination:
- the at least one environment parameter comprises a depth parameter indicative of the relative distance between the wearer and surrounding objects in the environment of the wearer;
- the orientation of the head of the wearer and the environment data are each measured over time and the environment map is determined based on the evolution over time of the measured environment data and the measured orientation of the head of the wearer;
- the method further comprises a storing step, during which the measured orientation of the head of the wearer, the measured environment data and the environment map are stored in a memory;
- the method further comprises:
   ∘ a head movement measuring step, during which the movement of the head of the wearer is measured over time,
   ∘ a next orientation determining step, during which the next orientation of the head of the wearer is determined based on the measured orientation of the head of the wearer and on the measured movement of the head, and
   ∘ a next environment data determining step, during which next environment data indicative of the environment data in the determined next orientation of the head of the wearer is based on the determined next orientation of the head of the wearer and the determined environment map;
- the method further comprises a wearer localization providing step, during which the localization of the wearer is provided; and the environment map is further determined based on the localization of the wearer;
- the localization of the wearer is provided by a localization sensor worn by the wearer or by a localization system comprising a camera embedded in the head mounted device and a processor configured to compute data received from the camera using a visual odometry algorithm;
- the environment map is determined simultaneously during the localization step;
- the method further comprises an activity information determining step, during which information indicative of the activity of the wearer is determined, and the environment map is further determined based on the information indicative of the activity of the wearer;
- the method further comprises an ephemeris data providing step, during which an ephemeris data indicative of the ephemeris is provided, and a time data determining step, during which a time data indicative of the current time is determined, and the environment map is further determined based on the ephemeris data and the time data;
- the environment map is determined using a sphere mapping algorithm or a tridimensional mapping algorithm.

An example not covered by the invention relates to a system for the execution of a method for determining an environment map of at least one environment parameter relating to the environment of a wearer of an active head mounted device according to the invention, the system comprising at least:
- a memory ; and
- a processor arranged to execute a program instructions stored in the memory to:
   ∘ measure a natural orientation of the head of the wearer;
   ∘ measure environment data for the measured orientation of the head of the wearer;
   ∘ repeat the head orientation measurement and the environment data measurement for a plurality of different natural orientations of the head of the wearer, and
   ∘ determine the environment map based on the measured environment data and the measured orientation of the head of the wearer for each different natural orientation of the head of the wearer.

A further embodiment of the invention is a method for controlling an active head mounted device worn by a wearer, the active head mounted device comprising at least:
- a head orientation sensor,
- an environment data sensor configured to measure environment data relating to the at least one environment parameter in at least one direction,
- a controller arranged to control at least one parameter of the active head mounted device,
the method comprising at least:
- an environment map determining step, during which an environment map of at least one environment parameter relating to the environment of the wearer of the active head mounted device is determined based on the method according to the first object of invention;
- an active head mounted device controlling step, during which the at least one parameter of the active head mounted device is controlled by the controller based on the determined environment map.

An example not covered by the invention relates to a controller for the execution of a method for controlling an active head mounted device worn by a wearer according to the invention, the controller comprising:
- a memory storing computer executable codes, and
- a processor configured to execute the stored computer executable codes so as to control the at least one parameter of the active head mounted device based at least on the determined environment map.

A second object of the invention as set forth in independent claim 11 is an active head mounted device configured to be worn by a wearer, the active head mounted device comprising at least:
- a head orientation sensor,
- an environment data sensor configured to measure environment data relating to the at least one environment parameter in at least one direction,
- a system configured to determine an environment map of at least one environment parameter relating to the environment of the wearer of the active head mounted device based on the measured environment data and the measured orientation of the head of the wearer for each different natural orientation of the head of the wearer; and
- a controller arranged to control at least one parameter of the active head mounted device based on the determined environment map; wherein the controller is an optical function controller adapted and configured to control the optical function of the head-mounted device based on the determined environment map; wherein the head mounted device further comprises an active filtering device comprising an active filter and a filter controller arranged to control the active filter, and wherein the filter controller is adapted and configured to control the active filter based on the determined environment

According to further embodiments, the head mounted device further comprises a display device configured to display information to the user and to position the displayed image based on the determined environment

An example not covered by the invention relates to a computer program product comprising one or more stored sequences of instructions that are accessible to a processor and which, when executed by the processor, causes the processor to carry out the steps of:
- the method for determining an environment map of at least one environment parameter relating to the environment of a wearer of an active head mounted device according to the invention; and/or
- the method for controlling an active head mounted device worn by a wearer, the active head mounted device according to the invention.

An example not covered by the invention relates to a computer-readable storage medium having a program recorded thereon; where the program makes the computer execute at least one of the methods of the invention.

An example not covered by the invention relates to a device comprising a processor adapted to store one or more sequence of instructions and to carry out at least one of the steps of the method according to the invention.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method.

The desired structure for a variety of these systems will appear from the description below. In addition, embodiments of the present invention are not described with reference to any particular programming language. It will be appreciated that a variety of programming languages may be used to implement the teachings of the inventions as described herein.

### BRIEF DESCRIPTION OF THE DRAWINGS

Embodiments of the invention will now be described, by way of example only, and with reference to the following drawings in which:
- Figure 1 is a schematic representation of an active head mounted device according to an embodiment of the invention, and
- Figure 2 is an illustration of a chart-flow of a method for determining an environment map of a wearer of an active head mounted device according to the invention.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

### DETAILED DESCRIPTION OF PREFERRED EMBODIMENTS

In the sense of the invention a "head mounted device" corresponds to any device arranged to be mounted on the head of a wearer.

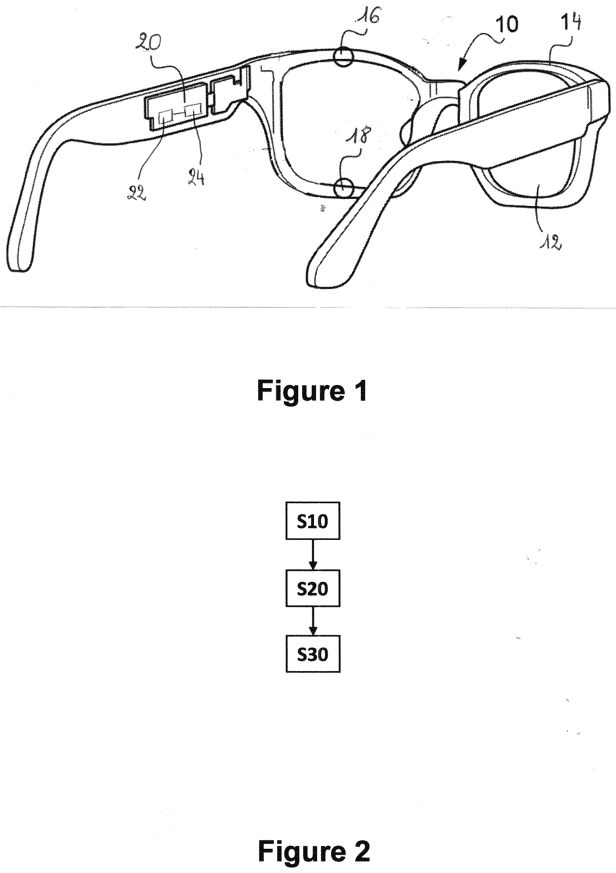

Figure 1 represents an example of an active head mounted device 10 configured to be worn by a wearer according to the first object of the invention. The active head mounted device 10 comprises at least an optical lens 12 and a spectacle frame 14. The or each optical lens 12 is adapted to be mounted in the spectacle frame 14.

Although the invention is not limited to such type of head-mounted devices, it appears to be particularly advantageous for head mounted devices comprising a spectacle frame.

In the framework of the invention, the term "optical lens" is to be understood to mean any type of known lens intended to be supported by a wearer's face. The term can refer to ophthalmic lenses such as corrective lenses, non-corrective lenses, semi-finished lenses, such as progressive addition lenses, unifocal or multifocal lenses. The term can also refer to said ophthalmic lenses which could present at least one added value such as, for example, tint, photochromism, polarization filtering, electrochromism, antireflective properties, antiscratch properties...

The active head mounted device may comprise a single optical lens covering either both eyes of the wearer, for example goggles or masks, or only one eye, for example a head mounted display. The active head mounted device may comprise two optical lenses each covering an eye of the wearer. The term can refer to ophthalmic optical equipment, non-ophthalmic optical equipment, sunglasses, glasses for sporting applications such as goggles, reading glasses, protective glasses, driving glasses.

Furthermore, the active head mounted device 10 comprises at least a head orientation sensor 16 and an environment data sensor 18, each mounted on or embedded in the spectacle frame 12. The sensors 16, 18 have different orientations and positions on the spectacle frame.

The head orientation sensor 16 is arranged on the spectacle frame and configured to sense the orientation of the head of the wearer.

Alternatively, at least one of the sensors can be mounted on or embedded in the optical lenses.

For example, the head orientation sensor 16 comprises an inertial measurement unit (IMU) comprising an accelerometer and a gyroscope (6-axes IMU) configured to give the relative glasses orientation. The inertial measurement unit can further comprises a magnetometer (9-axes IMU) configured to provide an absolute orientation of the head mounted device. Furthermore, an inertial measurement unit further comprises a filter to filter data measured by the sensors embedded in the inertial measurement unit. For example, the filter is a Kalman filter.

According to another example, the head orientation sensor 16 comprises at least a camera and a computation unit configured to compute data sensed by the camera thanks to a visual odometry algorithm. Such algorithm allows providing orientation and position variations.

Of course, due to the accuracy of the head orientation sensor, the measured orientation may be slightly different from the genuine orientation of the wearer's head.

The environment data sensor 18 is arranged on the spectacle frame and configured to measure environment data relating to the at least one environment parameter in at least one direction or in few directions.

Advantageously, the field of view of environment data sensor 18 intersects the field of view of the wearer such that it comprises at least a portion of the field of view of the wearer.

For example, environment data sensor 18 comprises a camera and/or one or few ambient luminosity sensors (ALS) having small field of view (FOV), and/or a depth sensor, for example a time-of-flight camera, lidar...). The resolution of the camera is at least a 1x1 pixel.

According to other examples, the environment data sensor 18 is configured to sense distance between the wearer and surrounding objects, temperature, sound, noise level, air quality, gas analysis.

According to the invention, the at least one environment parameter comprises:
- a luminosity parameter related to light sources around the wearer, and/or
- a color parameter indicative of colors in the environment of the wearer, and/or a parameter indicative of temperature, sound, noise level, air quality, gas analysis.

Preferably, the at least one environment parameter comprises a depth parameter indicative of the relative distance between the wearer and surrounding objects in the environment of the wearer.

According to an embodiment, one sensor embedded in the active head mounted device can be capable to measure both a natural orientation of the head of the wearer and environment data, for example a camera.

According to an embodiment, the head mounted device 10 further comprises advantageously at least one sensor configured to determine the gazing direction of the wearer, for example an eye tracker system.

The active head mounted device 10 further comprises a processing unit 20 to receive data sensed by the sensors 16, 18 and process them. The processing unit 20 may be arranged in one of the sides of the spectacle frame.

The active head mounted device 10 further comprises battery to power at least the sensors and the processing unit 20.

The processing unit 20 comprises a non-transitory computer-readable medium, at least one processor, and program instructions stored on the non-transitory computer-readable medium and executable by the at least one processor to implement the methods according to the invention as described herein after.

More particularly, the processing unit 20 of the active head mounted device 10 comprises a system 22 configured to determine an environment cartography or map of at least one environment parameter relating to the environment of the wearer of the active head mounted device. The environment map is determined based on the measured environment data and the measured orientation of the head of the wearer for each different natural orientation of the head of the wearer as explained hereinafter.

Alternatively, the system configured to determine an environment cartography or map of at least one environment parameter relating to the environment of the wearer of the active head mounted device can be embedded in a distant unity, for example in a smartphone, in communication with the processing unit 20 for receiving the measured environment data and the measured orientation of the head of the wearer for each different natural orientation of the head of the wearer and for transmitting the determined environment map.

Advantageously, the processing unit 20 of the active head mounted device 10 further comprises a controller 24 arranged to control at least one parameter of the active head mounted device 10 based on the determined environment map. To this end, the controller 24 comprises at least a memory and a processor. The memory is configured to store computer executable codes and the processor is configured to execute the stored computer executable codes so as to control the at least one parameter of the active head mounted device based at least on the determined environment map.

According to a first embodiment, the controller is an optical function controller adapted and configured to control the optical function of the head-mounted device based on the determined environment map.

According to a second embodiment compatible with the previous one, the active head mounted device further comprises a display device configured to display information to the user and to position the displayed image based on the determined environment map. For example, such head mounted device can also be configured to generate realistic images of virtual environments, also called device for virtual reality. According to another example, such head mounted device can be an optical see-through head mounted device configured to display virtual elements in the real-world environment of the user, also called device for augmented reality.

For augmented reality applications, if the measured environment parameters is indicative of sound, the display device of the head mounted device can be configured to generate and display an information indicative of the sound, for example the type of bird which sings.

For example, if the measured environment parameters is indicative of gas analysis, the display device of the head mounted device can be configured to generate and display an alert for the wearer, for example a firefighter. The environmental map allows indicating where it would be better to pass to evacuate victims.

According to a third embodiment compatible with the previous ones, the active head mounted device further comprises an active filtering device comprising an active filter and a filter controller arranged to control the active filter. The filter controller is adapted and configured to control the active filter based on the determined environment map. For example, the head mounted device comprises an electrochomic filter controlled by the environment luminosity.

A method for determining an environment map of at least one environment parameter relating to the environment of a wearer of the active head mounted device according to the second object of the invention will now be detailed with reference to figure 2.

The method comprising at least:
- a head orientation measurement step S10,
- an environment data measurement step S20, and
- an environment map determining step S30.

The head orientation measurement step S10 and the environment data measurement step S20 are repeated for a plurality of different natural orientations of the head of the wearer.

The head orientation measurement step S10 can be implemented before or after the environment data measurement step S20.

During the head orientation measurement step S10, a natural orientation of the head of the wearer is measured by the head orientation sensor.

In the sense of the invention, "natural orientation or movement" of the head of the wearer relates to orientation or movement of the head of the wearer without the use of target. They are natural movements or orientations by opposition to controlled movements of the wearer watching a predetermined visual target.

Environment data are measured by the data environment sensor for the measured orientation of the head of the wearer during the environment data measurement step S20.

Then, during the environment map determining step S30, the environment map is determined/built based on the measured environment data and the measured orientation of the head of the wearer for each different natural orientation of the head of the wearer.

Preferably, the orientation of the head of the wearer and the environment data are each measured over time and the environment map is determined based on the evolution over time of the measured environment data and the measured orientation of the head of the wearer.

The at least one environment parameter comprises:
- a luminosity parameter related to light sources around the wearer, and/or
- a color parameter indicative of colors in the environment of the wearer and/or a parameter indicative of temperature, sound, noise level, air quality, gas analysis.

Preferably, the at least one environment parameter comprises a depth parameter indicative of the relative distance between the wearer and surrounding objects in the environment of the wearer.

Advantageously, the method further comprises a storing step, during which the measured orientation of the head of the wearer, the measured environment data and the environment map are stored in the memory.

According to an embodiment, the method further comprises:
- a head movement measuring step, during which the movement of the head of the wearer is measured over time,
- a next orientation determining step, during which the next orientation of the head of the wearer is determined based on the measured orientation of the head of the wearer and on the measured movement of the head, and
- a next environment data determining step, during which next environment data indicative of the environment data in the determined next orientation of the head of the wearer is based on the determined next orientation of the head of the wearer and the determined environment map.

Additionally, the method may further comprise a wearer localization providing step, during which the localization of the wearer is provided. Then, the environment map is further determined based on the localization of the wearer.

The localization of the wearer is provided by a localization sensor worn by the wearer. Alternatively, the localization of the wearer can be provided by a localization system comprising a camera embedded in the head mounted device and a processor configured to compute data received from the camera using a visual odometry algorithm. Thanks to a visual odometry algorithm, it is possible to determine the movements (translation and rotation) of a wearer wearing a head mounted device wherein the camera is embedded relatively to an initial position. Indeed, from a camera frame acquired by the camera, some specific features as lines or corners are extracted. First an initialization step is necessary if the system is monocular, ie if only one camera is used, in order to estimate the depth of the first detected points. Afterwards, for each new frame, it is possible to know the new camera position with the extracted features from this new frame and these features 3D position. The new camera position is estimated by minimizing the difference between current features coordinates on the frame and the reprojection of the corresponding 3D features, deduced from previous frames, on the current frame. When new features are detected, the algorithm estimates their 3D positions with the knowledge of successive camera positions.

According to an embodiment, the environment map may be determined simultaneously during the localization step. For example, a method using a simultaneous localization and mapping (SLAM) algorithm can be used. In such a method, the head mounted device is localized via the localization of a sensor embedded in the head mounted device and the environment map is calculated with the parameter used for localization.

According to another embodiment compatible with the previous ones, the method further comprises an activity information determining step, during which information indicative of the activity of the wearer is determined, and the environment map is further determined based on the information indicative of the activity of the wearer.

According to another embodiment compatible with the previous ones, the method further comprises an ephemeris data providing step, during which an ephemeris data indicative of the ephemeris is delivered or provided, and a time data determining step, during which a time data indicative of the current time is determined, and the environment map is further determined based on the ephemeris data and the time data.

Advantageously, the environment map is determined using a sphere mapping algorithm or a tridimensional mapping algorithm. For each algorithm, an example of implementation of the method is described herein after.

An example of a method using a sphere mapping algorithm will now be detailed.

### Head orientation measurement step

During this step, the relative orientation of the head mounted device, and consequently of the head of the wearer wearing the head mounted device is provided by an inertial measurement unit (IMU) embedded in the head mounted device. The inertial measurement unit comprises at least an accelerometer and a gyroscope (6-axes IMU).

Furthermore, the inertial measurement unit can further comprise a magnetometer (9-axes IMU) allowing to provide an absolute orientation positioning and more accurate data.

As indicated hereinbefore, data provided by the inertial measurement unit data are usually filtered with a Kalman filter. This post-processing of data is done by a processor embedded in the head mounted device.

According to an embodiment, the gaze direction of the wearer is further determined, for example by an eye tracker system embedded in the head mounted device. In some case, the knowledge of the gaze direction allows the determination of an activity information indicative of the activity of the wearer. Otherwise, the activity information can be provided by other means, for example the information can be an input provided by the wearer. Thus, it is possible to know if the wearer is reading or using his near vision, for example, or looking far away and using his far vision.

### Sensors acquisition and processing frequencies

Thanks to the invention wherein the environmental sensor is configured to provide data in one direction or few directions, the map update can be slower than sensor acquisition for orientation allowing a low consumption of the system.

For example, when the wearer is immobile or the environment really uniform for example a tunnel with well-known periodic lightning, or corridor, long beach with sun...), it is possible to space out the map updates and new head mounted device control.

For example, if a camera is used to acquire an image of the environment, this couple image/orientation can be stored. If the wearer is not walking or is just reading a book or working on a computer, this couple image/orientation won't change quickly. Another map update is not useful in a short lapse of time. If a strong variation is determined between two successive measured orientations of the head of the wearer or between two successive measured values of an environment parameter, another acquisition will be done.

Such methods allow reducing the energy consumption of the head mounted device.

### Environment spherical map determining step

Based on the measured orientation and the field of view of the environmental sensor, all the points from the mesh of the spherical map in the sensor field of view are identified by computing the intersection between the sphere and the cone defined by the field of view. For each point in the sensor's field of view, environment data and acquisition time are stored in a memory.

The environment map is then updated with new values of environment data or measured head orientation if environmental data and/or orientation has changed.

Furthermore, when a stored value is old, it would be interesting to delete it. After a long time a value can change because the wearer walks, and so changes his point of view, or because the environment is dynamic (other people, car...). Regularly the spherical map is scanned and the old or obsolete values are deleted.

Moreover, if the movements of the head of the wearer are measured, a next orientation of the head can be determined or "predicted" and so the next orientation of the field of view of the wearer. Based on the next orientation, the mesh points which are not currently in the field of view of the wearer but will be soon can be identified allowing the determining in advance of the next environment data indicative of the environment data in the determined next orientation of the head of the wearer based on the environmental map.

For example, electrochromic glasses need time to change their darkness/tinted state. To avoid a delay in the change of the state, the future luminosity soon visible by the wearer can be determined by the head mounted device according to the invention and a command to the filter can be sent to begin a new state. Then, the electrochromic glasses will have the wanted darkness for the current light condition.

Furthermore, the values of the environment map can be advantageously stored. For example with the control of electrochromic glasses, the historical luminosity seen by the wearer is important to know what the current wearer light sensibility is. Indeed, if a wearer was in the dark, he will be dazzled when a light, even weak, will be visible.

Furthermore, the environment map can be advantageously determined based on the activity of the wearer. Indeed, for example in the case of luminosity mapping, if the wearer is moving (walking, biking or in motorized vehicle), it is useless to map the luminosity under the horizon. In fact, the data source located under the horizon wouldn't probably be far away from the wearer. When the user is stationary, it could be interesting to map on every direction. The data source near to the user can be mapped thanks to the spherical mapping algorithm.

In addition, if the wearer changes his activity, for example he stops walking, it could be interesting to reset the part of the spherical map under the horizon, because after moving, the old data stored under the horizon are not correct.

For some applications, for example for electrochomic glasses, the providing of ephemeris data is advantageous. Indeed, it can be useful to have the current sun position in the sky. If the sun position was not stored in the spherical map, because the sun is not in the current field of view of the wearer, the current position of the sun can be determined from the ephemeris data and the current time. Indeed, with ephemeris data and the current time, the sun position in right ascension and declination coordinates can be determined. Then, if an approximate position of the wearer on earth is provided or determined for example by a smartphone having a global positioning system (GPS) during the last connection between the smartphone and the head mounted device and his absolute orientation, i.e. the orientation of the wearer's head relatively to north, is provided by a suitable inertial measurement unit (having 9 degrees of freedom, 9-DOF), the position of the sun relatively to the wearer's field of view can be determined.

An example of a method using a tridimensional mapping algorithm will now be detailed.

A method using the 3D-mapping algorithm is almost the same as the one using the spherical mapping algorithm and described hereinbefore. Only the orientation and localization of the head and the mapping step are differents.

As indicated hereinbefore, movements of the head of the wearer can be provided by a camera embedded in the head mounted device and a processor configured to compute data received from the camera using a visual odometry algorithm. Thanks to a visual odometry algorithm, it is possible to determine the movements (translation and rotation) of a wearer wearing a head mounted device wherein the camera is embedded relatively to an initial position. Indeed, from a camera frame acquired by the camera, some specific features as lines or corners are extracted. First an initialization step is necessary if the system is monocular, *i.e.* if only one camera is used, in order to estimate the depth of the first detected points. When specific features are detected on several frames, their 3D position can be determined based on the known position of the camera for each captured frame. Afterwards, for each new frame, it is possible to know the new camera position based on the extracted specific features from this new frame and the 3D-positions of the extracted specific features determined during the initialization step. The new camera position and orientation are estimated by minimizing the difference between current parameter coordinates on the frame and the reprojection of the corresponding 3D parameters, deduced from previous frames, on the current frame. When new values of the parameter are detected, the algorithm estimates their 3D positions and orientations with the knowledge of successive camera positions and orientations.

Furthermore, a simultaneous localization and mapping (SLAM) algorithm can be used to localize and orientate the head mounted device. In this case, a camera, two cameras or a depth camera with one colour camera embedded in the head mounted device can be used to determine the localization and the environmental map. Such method is well suited for sensors which provides information in different directions usually with relative small field of view for each directions.

As for the method using the spherical mapping algorithm, some values of the environmental map can become wrong after a moment due to changes in the environment of the wearer and/or the wearer's head movements which can generate occlusion. Such values can be deleted from the environment map when they are too old or when the user has moved too much.

The invention can be advantageously used for example to control electrochromic glasses. Indeed, the luminosity mapping allows determining, according to the current orientation of the field of view of the wearer, which luminosity is visible by the wearer and if there is a possible intense light source in the field of view or near it. In case of possible disturbance, the electrochromic glasses will become darker. The darkness can depend on the source localization and orientation relatively to the wearer. So, the electrochromic glasses won't have the same color, if an intense light source is in the peripheral vision or in the middle of the field of view. An intense light source in the peripheral vision can be disturbing for the central vision. Thus, it may be useful to have a transmission of the electrochromic glasses lower than the one corresponding to the average luminosity measured classically with an ambient luminosity sensor.

Furthermore, the invention can be advantageously used with a camera. Then, for each update, different luminosity or images of scenes are filled, depending on the camera resolution. The camera can be linked to an inertial measuring unit that indicates if the change of orientation of the wearer is large enough to oblige to another capture. If not, the data remains the same and the behaviour of the concerned head mounted device, whether it is an electrochomic device or an augmented reality equipment, does not change.

With a depth sensor, for example a time-of-flight camera, LIDAR..., embedded in a head mounted device according to the invention, it is possible to determine an approximate depthmap. The values in this map stay true if the wearer of the head mounted device doesn't move in translation. This approximation can be valid for sitting wearer in static environment, i.e. when object from the environment does not move. A SLAM or visual odometry algorithms allows determining 3D environmental map even if there is a translation. This situation is interesting with augmented reality equipment or variable focal lenses embedded in the head mounted device.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. Method for determining an environment map of at least one environment parameter relating to the environment of a wearer of an active head mounted device (10) comprising an active filter, a filter controller, and a controller, the active head mounted device comprising at least a head orientation sensor (16) and an environment data sensor (18) configured to measure environment data indicative to the at least one environment parameter in at least one direction, the controller being adapted and configured to control an optical function of the active head mounted device based on the determined environment map and the filter controller being adapted and configured to control the active filter based on the determined environment map, the method comprising at least:
- a head orientation measurement step (S10), during which a natural orientation of the head of the wearer is measured by the head orientation sensor (16);
- an environment data measurement step (S20), during which environment data are measured by the data environment sensor (18) for the measured orientation of the head of the wearer, the environment parameter comprising a luminosity parameter related to light sources around the wearer, and/or a color parameter indicative of colors in the environment of the wearer, and/or a parameter indicative of temperature, sound, noise level, air quality, or gas analysis;
- repeating the head orientation measurement step (S10) and the environment data measurement step (S20) for a plurality of different natural orientations of the head of the wearer, and
- an environment map determining step (S30), during which the environment map is determined based on the measured environment data and the measured orientation of the head of the wearer for each different natural orientation of the head of the wearer.

2. The method according to claim 1, wherein the at least one environment parameter further comprises a depth parameter indicative of the relative distance between the wearer and surrounding objects in the environment of the wearer.

3. The method according to claim 1 or 2, wherein the orientation of the head of the wearer and the environment data are each measured over time and the environment map is determined based on the evolution over time of the measured environment data and the measured orientation of the head of the wearer.

4. The method according to any of the preceding claims 1 to 3, wherein the method further comprises:
- a head movement measuring step, during which the movement of the head of the wearer is measured over time,
- a next orientation determining step, during which the next orientation of the head of the wearer is determined based on the measured orientation of the head of the wearer and on the measured movement of the head, and
- a next environment data determining step, during which next environment data indicative of the environment data in the determined next orientation of the head of the wearer is based on the determined next orientation of the head of the wearer and the determined environment map.

5. The method according to any of the preceding claims 1 to 4, wherein the method further comprises a wearer localization providing step, during which the localization of the wearer is provided; and the environment map is further determined based on the localization of the wearer.

6. The method according to claim 5, wherein the environment map is determined simultaneously during the localization step.

7. The method according to any of the preceding claims 1 to 6, wherein the method further comprises an activity information determining step, during which information indicative of the activity of the wearer is determined, and the environment map is further determined based on the information indicative of the activity of the wearer.

8. The method according to any of the preceding claims 1 to 7, wherein the method further comprises an ephemeris data delivery step, during which an ephemeris data indicative of the ephemeris are provided, and a time data determining step, during which a time data indicative of the current time is determined, and the environment map is further determined based on the ephemeris data and the time data.

9. The method according to any of the preceding claims 1 to 8, wherein the environment map is determined using a spherical mapping algorithm or a tridimensional mapping algorithm.

10. Method for controlling an active head mounted device (10) worn by a wearer,
the method comprising at least:
- an environment map determining step, during which an environment map of at least one environment parameter relating to the environment of the wearer of the active head mounted device is determined based on the method according to any of the preceding claims 1 to 9;
- an active head mounted device controlling step, during which at least one parameter of the active head mounted device is controlled by the controller based on the determined environment map.

11. An active head mounted device (10) configured to be worn by a wearer, the active head mounted device comprising at least:
- a head orientation sensor (16),
- an environment data sensor (18) configured to measure environment data relating to the at least one environment parameter in at least one direction, the environment parameter comprising a luminosity parameter related to light sources around the wearer, and/or a color parameter indicative of colors in the environment of the wearer, and/or a parameter indicative of temperature, sound, noise level, air quality, or gas analysis,
- a system configured to determine an environment map of at least one environment parameter relating to the environment of the wearer of the active head mounted device based on the measured environment data and the measured orientation of the head of the wearer for each different natural orientation of the head of the wearer; and
- a controller (24) arranged to control at least one parameter of the active head mounted device based on the determined environment map;
wherein the controller is an optical function controller adapted and configured to control the optical function of the head-mounted device based on the determined environment map;
wherein the head mounted device further comprises an active filtering device comprising an active filter and a filter controller arranged to control the active filter, and wherein the filter controller is adapted and configured to control the active filter based on the determined environment map.

12. The active head mounted device according to claim 11, wherein the head mounted device further comprises a display device configured to display information to the user and to position the displayed image based on the determined environment map.

## Patentansprüche

1. Verfahren zum Bestimmen einer Umgebungskarte mindestens eines Umgebungsparameters, der sich auf die Umgebung eines Trägers einer aktiven kopfmontierten Vorrichtung (10) bezieht, die ein aktives Filter, eine Filtersteuerung und eine Steuerung umfasst, wobei die aktive kopfmontierte Vorrichtung mindestens einen Kopfausrichtungssensor (16) und einen Umgebungsdatensensor (18) umfasst, der dazu konfiguriert ist, den mindestens einen Umgebungsparameter angebende Umgebungsdaten in mindestens einer Richtung zu messen, wobei die Steuerung dazu angepasst und konfiguriert ist, eine optische Funktion der aktiven kopfmontierten Vorrichtung basierend auf der bestimmten Umgebungskarte zu steuern, und die Filtersteuerung dazu angepasst und konfiguriert ist, das aktive Filter basierend auf der bestimmten Umgebungskarte zu steuern, wobei das Verfahren mindestens Folgendes umfasst:
- einen Kopfausrichtungsmessschritt (S10), bei dem eine natürliche Ausrichtung des Kopfes des Trägers durch den Kopfausrichtungssensor (16) gemessen wird;
- einen Umgebungsdatenmessschritt (S20), bei dem Umgebungsdaten durch den Datenumgebungssensor (18) für die gemessene Ausrichtung des Kopfes des Trägers gemessen werden, wobei der Umgebungsparameter einen auf Lichtquellen um den Träger herum bezogenen Helligkeitsparameter und/oder einen Farben in der Umgebung des Trägers angebenden Farbparameter und/oder einen Temperatur, Schall, Geräuschpegel, Luftqualität oder Gasanalyse angebenden Parameter umfasst;
- Wiederholen des Kopfausrichtungsmessschritts (S10) und des Umgebungsdatenmessschritts (S20) für mehrere unterschiedliche natürliche Ausrichtungen des Kopfes des Trägers und
- einen Umgebungskartenbestimmungsschritt (S30), bei dem die Umgebungskarte basierend auf den gemessenen Umgebungsdaten und der gemessenen Ausrichtung des Kopfes des Trägers für jede unterschiedliche natürliche Ausrichtung des Kopfes des Trägers bestimmt wird.

2. Verfahren nach Anspruch 1, wobei der mindestens eine Umgebungsparameter ferner einen Tiefenparameter umfasst, der den relativen Abstand zwischen dem Träger und umgebenden Objekten in der Umgebung des Trägers angibt.

3. Verfahren nach Anspruch 1 oder 2, wobei die Ausrichtung des Kopfes des Trägers und die Umgebungsdaten jeweils über einen Zeitraum gemessen werden und die Umgebungskarte basierend auf der zeitlichen Entwicklung der gemessenen Umgebungsdaten und der gemessenen Ausrichtung des Kopfes des Trägers bestimmt wird.

4. Verfahren nach einem der vorhergehenden Ansprüche 1 bis 3, wobei das Verfahren ferner Folgendes umfasst:
- einen Kopfbewegungsmessschritt, bei dem die Bewegung des Kopfes des Trägers über einen Zeitraum gemessen wird,
- einen nächsten Ausrichtungsbestimmungsschritt, bei dem die nächste Ausrichtung des Kopfes des Trägers basierend auf der gemessenen Ausrichtung des Kopfes des Trägers und auf der gemessenen Bewegung des Kopfes bestimmt wird, und
- einen nächsten Umgebungsdatenbestimmungsschritt, bei dem nächste Umgebungsdaten, die die Umgebungsdaten in der bestimmten nächsten Ausrichtung des Kopfes des Trägers angeben, auf der bestimmten nächsten Ausrichtung des Kopfes des Trägers und der bestimmten Umgebungskarte basieren.

5. Verfahren nach einem der vorhergehenden Ansprüche 1 bis 4, wobei das Verfahren ferner einen Trägerlokalisierungsbereitstellungsschritt, bei dem die Lokalisierung des Trägers bereitgestellt wird, umfasst; und die Umgebungskarte ferner basierend auf der Lokalisierung des Trägers bestimmt wird.

6. Verfahren nach Anspruch 5, wobei die Umgebungskarte bei dem Lokalisierungsschritt gleichzeitig bestimmt wird.

7. Verfahren nach einem der vorhergehenden Ansprüche 1 bis 6, wobei das Verfahren ferner einen Aktivitätsinformationsbestimmungsschritt, bei dem Informationen, die die Aktivität des Trägers angeben, bestimmt werden, umfasst und die Umgebungskarte ferner basierend auf den Informationen, die die Aktivität des Trägers angeben, bestimmt wird.

8. Verfahren nach einem der vorhergehenden Ansprüche 1 bis 7, wobei das Verfahren ferner einen Ephemeridendatenlieferschritt, bei dem Ephemeridendaten, die die Ephemeriden angeben, bereitgestellt werden, und einen Zeitdatenbestimmungsschritt, bei dem Zeitdaten, die die aktuelle Zeit angeben, bestimmt werden, umfasst und die Umgebungskarte ferner basierend auf den Ephemeridendaten und den Zeitdaten bestimmt wird.

9. Verfahren nach einem der vorhergehenden Ansprüche 1 bis 8, wobei die Umgebungskarte unter Verwendung eines Algorithmus für ein sphärisches Mapping oder eines Algorithmus für ein dreidimensionales Mapping bestimmt wird.

10. Verfahren zum Steuern einer aktiven kopfmontierten Vorrichtung (10), die von einem Träger getragen wird, wobei das Verfahren mindestens Folgendes umfasst:
- einen Umgebungskartenbestimmungsschritt, bei dem eine Umgebungskarte mindestens eines Umgebungsparameters, der sich auf die Umgebung des Trägers der aktiven kopfmontierten Vorrichtung bezieht, basierend auf dem Verfahren nach einem der vorhergehenden Ansprüche 1 bis 9 bestimmt wird;
- einen Schritt zum Steuern einer aktiven kopfmontierten Vorrichtung, bei dem mindestens ein Parameter der aktiven kopfmontierten Vorrichtung durch die Steuerung basierend auf der bestimmten Umgebungskarte gesteuert wird.

11. Aktive kopfmontierte Vorrichtung (10), die dazu konfiguriert ist, von einem Träger getragen zu werden, wobei die aktive kopfmontierte Vorrichtung mindestens Folgendes umfasst:
- einen Kopfausrichtungssensor (16),
- einen Umgebungsdatensensor (18), der dazu konfiguriert ist, Umgebungsdaten, die sich auf den mindestens einen Umgebungsparameter beziehen, in mindestens einer Richtung zu messen, wobei der Umgebungsparameter einen auf Lichtquellen um den Träger herum bezogenen Helligkeitsparameter und/oder einen Farben in der Umgebung des Trägers angebenden Farbparameter und/oder einen Temperatur, Schall, Geräuschpegel, Luftqualität oder Gasanalyse angebenden Parameter umfasst,
- ein System, das dazu konfiguriert ist, eine Umgebungskarte mindestens eines Umgebungsparameters, der sich auf die Umgebung des Trägers der aktiven kopfmontierten Vorrichtung bezieht, basierend auf den gemessenen Umgebungsdaten und der gemessenen Ausrichtung des Kopfes des Trägers für jede unterschiedliche natürliche Ausrichtung des Kopfes des Trägers zu bestimmen; und
- eine Steuerung (24), die dazu ausgelegt ist, mindestens einen Parameter der aktiven kopfmontierten Vorrichtung basierend auf der bestimmten Umgebungskarte zu steuern;
wobei die Steuerung eine Steuerung einer optischen Funktion ist, die dazu angepasst und konfiguriert ist, die optische Funktion der kopfmontierten Vorrichtung basierend auf der bestimmten Umgebungskarte zu steuern; wobei die kopfmontierte Vorrichtung ferner eine Vorrichtung zur aktiven Filterung, die ein aktives Filter umfasst, und eine Filtersteuerung, die dazu ausgelegt ist, das aktive Filter zu steuern, umfasst und wobei die Filtersteuerung dazu angepasst und konfiguriert ist, das aktive Filter basierend auf der bestimmten Umgebungskarte zu steuern.

12. Aktive kopfmontierte Vorrichtung nach Anspruch 11, wobei die kopfmontierte Vorrichtung ferner eine Anzeigevorrichtung umfasst, die dazu konfiguriert ist, dem Benutzer Informationen anzuzeigen und das angezeigte Bild basierend auf der bestimmten Umgebungskarte zu positionieren.

## Revendications

1. Procédé de détermination d'une carte d'environnement d'au moins un paramètre d'environnement relatif à l'environnement d'un utilisateur d'un dispositif actif monté sur la tête (10) comprenant un filtre actif, un dispositif de commande de filtre et un dispositif de commande, le dispositif actif monté sur la tête comprenant au moins un capteur d'orientation de tête (16) et un capteur de données d'environnement (18) configuré pour mesurer des données d'environnement indicatives de l'au moins un paramètre d'environnement dans au moins une direction, le dispositif de commande étant adapté et configuré pour commander une fonction optique du dispositif actif monté sur la tête sur la base de la carte d'environnement déterminée, et le dispositif de commande de filtre étant adapté et configuré pour commander le filtre actif sur la base de la carte d'environnement déterminée, le procédé comprenant au moins :
- une étape (S10) de mesure de l'orientation de la tête, au cours de laquelle une orientation naturelle de la tête de l'utilisateur est mesurée par le capteur d'orientation de tête (16),
- une étape de mesure de données d'environnement (S20), au cours de laquelle des données d'environnement sont mesurées par le capteur de données d'environnement (18) pour l'orientation mesurée de la tête de l'utilisateur, le paramètre d'environnement comprenant un paramètre de luminosité lié à des sources lumineuses autour de l'utilisateur, et/ou un paramètre de couleur indicatif de couleurs dans l'environnement de l'utilisateur, et/ou un paramètre indicatif de température, du son, du niveau de bruit, de qualité de l'air, ou d'analyse de gaz ;
- la répétition de l'étape (S10) de mesure d'orientation de la tête et l'étape (S20) de mesure de données d'environnement pour une pluralité d'orientations naturelles différentes de la tête de l'utilisateur, et
- une étape de détermination (S30) d'une carte d'environnement, au cours de laquelle la carte d'environnement est déterminée sur la base des données d'environnement mesurées et de l'orientation mesurée de la tête de l'utilisateur pour chaque orientation naturelle de la tête de l'utilisateur différente.

2. Procédé selon la revendication 1, dans lequel l'au moins un paramètre d'environnement comprend en outre un paramètre de profondeur indicatif de la distance relative entre l'utilisateur et les objets environnants dans l'environnement de l'utilisateur.

3. Procédé selon la revendication 1 ou 2, dans lequel l'orientation de la tête de l'utilisateur et les données d'environnement sont chacune mesurées au cours du temps et la carte d'environnement est déterminée sur la base de l'évolution au cours du temps des données d'environnement mesurées et de l'orientation mesurée de la tête de l'utilisateur.

4. Procédé selon l'une quelconque des revendications précédentes 1 à 3, dans lequel le procédé comprend en outre :
- une étape de mesure du mouvement de tête, au cours de laquelle le mouvement de la tête de l'utilisateur est mesuré au cours du temps,
- une étape suivante de détermination de l'orientation, au cours de laquelle la prochaine orientation de la tête de l'utilisateur est déterminée sur la base de l'orientation mesurée de la tête de l'utilisateur et du déplacement mesuré de la tête, et
- une prochaine étape de détermination de données d'environnement, pendant laquelle des prochaines données d'environnement indicatives des données d'environnement à la prochaine orientation de la tête de l'utilisateur déterminée sont basées sur la prochaine orientation de la tête de l'utilisateur déterminée et la carte d'environnement déterminée.

5. Procédé selon l'une quelconque des revendications précédentes 1 à 4, dans lequel le procédé comprend en outre une étape de fourniture de localisation de l'utilisateur, au cours de laquelle la localisation de l'utilisateur est fournie ; et la carte d'environnement est en outre déterminée sur la base de la localisation de l'utilisateur.

6. Procédé selon la revendication 5, dans lequel la carte d'environnement est déterminée simultanément pendant l'étape de localisation.

7. Procédé selon l'une quelconque des revendications précédentes 1 à 6, dans lequel le procédé comprend en outre une étape de détermination d'informations d'activité, pendant laquelle des informations indicatives de l'activité de l'utilisateur sont déterminées, et la carte d'environnement est en outre déterminée sur la base des informations indicatives de l'activité de l'utilisateur.

8. Procédé selon l'une quelconque des revendications précédentes 1 à 7, dans lequel le procédé comprend en outre une étape de délivrance de données d'éphémérides, pendant laquelle des données d'éphémérides indicatives des éphémérides sont fournies, et une étape de détermination de données de temps, pendant laquelle des données de temps indicatives de l'heure courante sont déterminées, et la carte d'environnement est en outre déterminée sur la base des données d'éphémérides et des données de temps.

9. Procédé selon l'une quelconque des revendications précédentes 1 à 8, dans lequel la carte d'environnement est déterminée en utilisant un algorithme de cartographie sphérique ou un algorithme de cartographie tridimensionnelle.

10. Procédé de commande d'un dispositif actif monté sur la tête (10) porté par un utilisateur, le procédé comprenant au moins :
- une étape de détermination d'une carte d'environnement, au cours de laquelle on détermine une carte d'environnement d'au moins un paramètre d'environnement relatif à l'environnement de l'utilisateur du dispositif actif monté sur la tête sur la base du procédé selon l'une quelconque des revendications précédentes 1 à 9 ;
- une étape de commande de dispositif actif monté sur la tête, au cours de laquelle au moins un paramètre du dispositif actif monté sur la tête est commandé par le dispositif de commande sur la base de la carte d'environnement déterminée.

11. Dispositif actif monté sur la tête (10) configuré pour être porté par un utilisateur, le dispositif actif monté sur la tête comprenant au moins :
- un capteur d'orientation de tête (16),
- un capteur de données d'environnement (18), configuré pour mesurer des données d'environnement relatives à l'au moins un paramètre d'environnement dans au moins une direction, le paramètre d'environnement comprenant un paramètre de luminosité lié à des sources lumineuses autour de l'utilisateur, et/ou un paramètre de couleur indicatif de couleurs dans l'environnement de l'utilisateur, et/ou un paramètre indicatif de température, du son, du niveau de bruit, de qualité de l'air, ou d'analyse de gaz,
- un système configuré pour déterminer une carte d'environnement d'au moins un paramètre d'environnement relatif à l'environnement de l'utilisateur du dispositif actif monté sur la tête sur la base des données d'environnement mesurées et de l'orientation mesurée de la tête de l'utilisateur pour chaque orientation naturelle de la tête de l'utilisateur différente ; et
- un dispositif de commande (24) agencé pour commander au moins un paramètre du dispositif actif monté sur la tête sur la base de la carte d'environnement déterminée ; dans lequel le dispositif de commande est un dispositif de commande de fonction optique adapté et configuré pour commander la fonction optique du dispositif monté sur la tête sur la base de la carte d'environnement déterminée ; dans lequel le dispositif monté sur la tête comprend en outre un dispositif de filtrage actif comprenant un filtre actif et un dispositif de commande de filtre agencé pour commander le filtre actif, et dans lequel le dispositif de commande de filtre est adapté et configuré pour commander le filtre actif sur la base de la carte d'environnement déterminée.

12. Dispositif actif monté sur la tête selon la revendication 11, dans lequel le dispositif monté sur la tête comprend en outre un dispositif d'affichage configuré pour afficher des informations à l'utilisateur et pour positionner l'image affichée sur la base de la carte d'environnement déterminée.
